# EUROPEAN PATENT APPLICATION

(11) **EP 1 653 215 A1**
(43) Date of publication of application: **03.05.2006**
(21) Application number: 04077979.5
(22) Date of filing: 29.10.2004
(51) Int. Cl.: G01N 17/00, G01N 33/34, B41M 5/00

(54) **Method for accelerated measurement of fading characteristics of recording media, as well as recording media**

(71) Applicant: Fuji Photo Film B.V., 5047 TK Tilburg (NL)
(72) Inventor: Hendrix, Hubertus Gerardus Marie, 5042 TE Tilburg (NL); Temmei, Hiroyuki, 5015 MG Tilburg (NL); van Dijk, Wilhelmus Lambertus, 5076 EK Haaren (NL); Geurts, Franciscus Antonius Albertus, 5503 SJ Veldhoven (NL)
(74) Representative: Winckels, Johannes Hubertus F.

(57) **Abstract**

The invention is directed a method for measuring the color fading of printed images, an apparatus in which said method can be executed and to a recording medium, having excellent fading behaviour, as measured according to said method.

## Description

### Field of the invention

The invention is directed to a method for accelerated measurement of fading characteristics of recording media, and to an apparatus for measuring these fading characteristics. The invention is furthermore directed to recording media having the good fading characteristics measured according to the method of this invention.

### Prior art

In recent years, a variety of image printing equipment has been developed and put to market. For example, color printers of the type wherein inks of plural colors are ejected from a head are now widespread. In particular, a high-definition color print can be made with such printing device making use of exclusive recording paper and an exclusive ink set. The quality of such image is comparable with that of a silver halide photograph.

In general one of the most important quality aspects is image endurance. When a nice image is provided by a printing machine, it is desirable, that such an image will not fade. Fading means that the density of all, or some of the used colors will become lower in time and in worst case eventually disappear completely.

This fading is a natural process and can be due to various mechanisms.

Another aspect of this fading is, that it is a slow process. So there is a need for accelerated measurement of this fading, because in a world in which the new products are being developed faster and faster, the results of a new product with respect to natural aging cannot be awaited.

Apparatus for measuring the color fading, are known. In such apparatus the image sample can be tested under various conditions by placing the sample in a test chamber having a holder capable of suitably fitting the sample and being able to control temperature and humidity and using a light source such as a xenon lamp for sunlight or a high luminance fluorescent lamp for indoor light (Japanese Patent Application Laid-Open No. H05-312713, and the like).

Japanese Patent Application Laid-Open No. S58-45539 describes an apparatus for environmental test equipped with means for controlling temperature, atmospheric pressure and the like of a test chamber.

In the conventional apparatus for fading test, however, a synergistic action between the various circumstances that may cause fading has not been sufficiently investigated. Using the fading methods as described in the prior art, products can be developed, which in one ink-paper combination will give good fading results, while using the same substrate with another ink will give worse fading characteristics. The prior art methods have been unable to simulate fading under wide conditions.

EP-A-1 418 416 discloses a method and apparatus for weatherability testing of images. This known method requires the presence of an atmosphere of ozone and at least another gas, such as NO₂, SO₂ H₂S and Cl₂. Although this known method is said to simulate exactly light fastness and gas fastness of recorded images, the use of the gas compounds other than ozone requires considerable safety measures, due to the toxicity of these compounds. Furthermore the method was only used for one substrate ink combination.

There remains therefore a need for the development of a method for accelerated fading testing, in order to develop products, in particular recording substrates, which give a good fading behaviour under various conditions using various printing techniques, with various pigments.

### Summary of the invention

It is an object of the present invention to provide a method for accelerated measurement of the fading characteristics of imags printed on recording media and an apparatus, for measuring said fading characteristics.

The object of the present invention also is to provide a recording medium having good overall properties, said recording medium more in particular being suited to produce images of photographic quality, wherein the colors applied to the medium have a superior behaviour with respect to fading.

It is another object of the present invention to provide a recording medium, in which the fading of the applied pigments is nearly independent of the humidity used, or the amount of UV light used.

The present inventors surprisingly found that good results, *viz*. reliable simulation of natural dye fading can be obtained using an equipment, in which samples are subjected to mixture comprising ozone in air and in which the temperature, humidity and light intensity and wavelength can be varied independently. Using such measurement it was possible to develop a substrate which gave good fading characteristics using various printing techniques.

### Drawing

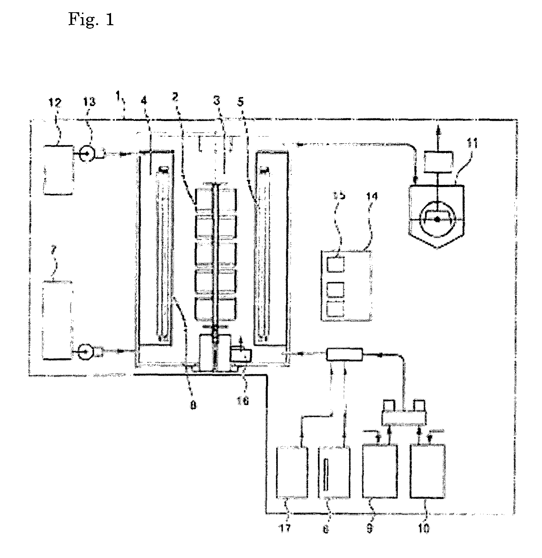

Fig. 1 schematically illustrates the construction of an apparatus for fading measurement of an image according to the present invention.

### Detailed description of the invention

The present invention describes a method for measuring the fading of a recorded image comprising the steps of placing the image in a measuring chamber, which contains a mixture of ozone in air, in which chamber the humidity, the amount of light, the temperature and the amount of ozone can be varied independently.

It is known, that ozone and light are detrimental for the stability of the formed image on a substrate, but to find out what embodiment behaves best under natural aging conditions takes too much time and would thus influence speed of development negatively.

Therefore various kinds of accelerated aging tests have been developed together with the correspondent equipment. It might be, that under one condition the natural aging of an image printed on a substrate is simulated reasonably, but when using other printed material, this simulation might not be valid any more. An explanation for this can be, that under accelerated conditions, other aging mechanism may become important, which for example have a low probability to occur under natural conditions. It is however generally appreciated, that (UV) light and ozone play an important role in fading phenomena. We have now found, that not only the amount of ozone and/or light play an important role, but that the conditions temperature and humidity also play an important role. Because of this finding, we could develop a substrate, which gives very good fading characteristics when used in various printing applications, such as ink-jet recording, electrophotographic recording, thermal ink-transfer recording, thermal color recording, a silver halide photograph, Giclée printing, colour copying, screen printing, gravure, dye-sublimation, flexography, and the like.

In the method according to the present invention, the gas used in the measuring chamber is a mixture of ozone and air. The amount of ozone can be kept constant over the testing period over a various concentration ranging typically from 0.1 to 10 ppm. During the test the amount of ozone can also be varied between these limits.

The air used is preferably obtained by passing air through a catalyst or the like to remove other components than nitrogen and oxygen so the test is not influenced, by possible local air impurities.

The ozone may be supplied separately into a test chamber or mixed in advance and then supplied to the test chamber. As a method for supplying the mixed gas, the mixed gas of a prescribed compositional ratio may be continuously supplied with a constant flow rate to the test chamber during the fading test. Alternatively, the interior of the test chamber may be set to the mixed gas atmosphere, and the supply of the gas may be then stopped during the fading test. In the present invention, the fading characteristics of the image can be analyzed in detail by analyzing the compositional ratio of the gas after the fading test. When many samples are tested at the same time, the former method is preferred. Incidentally, a means for supplying the ozone may be either an ozone generator or a general gas cylinder.

In the present invention, the mixed gas may be changed three to five times per hour during the fading test. Specifically, the flow rate of the mixed gas per hour is preferably 500 to 5,000 m³/h (STP), more preferably 1000 to 3,000 m³/h (STP). This is dependant of the volume of the measuring chamber. The amounts mentioned are representative for a measuring chamber with a content of about 0.5 m³. When an image to be tested is an image obtained by absorbing an ink in pores of a recording medium like ink-jet recording, the flow velocity of the mixed gas is preferably 0.1 to 2.5 m/s, more preferably 0.5 to 2 m/s because the flow velocity may have an influence that the image to be tested is deteriorated.

The light source used is preferably suitably selected according to conditions intended to simulate, for example, outdoor or indoor environment. In the case of outdoor light (sunlight), a xenon lamp, a halogen lamp or the like is preferably used. The xenon lamp is particularly preferably used. In the case of indoor light, a fluorescent lamp, tungsten-filament lamp or the like is preferably used. The fluorescent lamp is particularly preferably used.

The quantity of light to be applied is also suitably selected according to the conditions intended to simulate. For example, intensity of light is set to be from 6 klx to 150 klx, and the irradiation time is controlled. As the output of light from the lamps reduces upon aging, means are provided to cope with this reduction in output. The lamps or array of lamps when new is operated a power between 50 and 70% of the maximum power and the light output is measured continuously. If the output is weakened the power is adjusted in order to obtain the same output in klx again. The amount of light is controlled with an accuracy of 1 klx or less, preferably with an accuracy of 0.1 klx.

In the present invention, it is most important to measure the influence of the temperature and/or the humidity on the printed image. We have found, that the image in which the fading characteristics in time are good under various humidities, also have a good fading behaviour under natural conditions. So it is very important, to be able to accurately control the temperature and humidity and to be able to vary these parameters substantially. To do so, the light source is preferably cooled. To control the temperature in the measuring chamber without cooling of the lamps is quite difficult so preferably the lamps are in a separate unit from the measuring chamber where the lamps are cooled by cool air. Within the test chamber means have to be provided to control the temperature and the humidity. Preferably it is possible to vary the temperature between 15 and 50 °C with an accuracy of 1°C. The temperature controlling means are preferably controlling means of the heat exchange type.

The influence of the humidity on the fading characteristics is very large. It was found, that the fading characteristics at a certain ozone concentration and amount of light is very much dependant on the humidity used. So by varying the humidity significant information is gathered about the fading. In the present invention, the humidity can be typically controlled between 10 and 80 % relative humidity (RH) with an accuracy of preferably better than 2 %RH. In order to achieve this humidity controlling means are provided, preferably humidifying means in which humidity is obtained from steam obtained by heating water generated at another place than the test chamber, and a water drop preventing mechanism for avoiding penetration of water drops caused by the steam into the test chamber. By providing such means, an image may be subjected to the fading test according to the invention. By providing these means, the fading of an image to be tested can be more exactly and simply simulated. The method can be used for any recorded image irrespective of the used image substrate or the used recording layer composition.

In a specific embodiment the fading test is performed as follows: a sample of a recorded image is placed in a measuring chamber. The measuring chamber contains a mixture of ozone (for example 5ppm) in air, the amount of light, the temperature and the amount of ozone is kept at a constant level. The humidity is kept constant on various levels, and for these humidity levels the fading is determined, by exposing the samples for as much as 10 days to these conditions and measuring the colors after various time intervals. For very stable images no relation can be detected for the aging behaviour under various humidity, however for other material aging at high humidity is much faster, than at low humidity.

In another embodiment the fading of a recorded image comprises the steps of placing the image in a measuring chamber, in which the temperature and humidity is kept constant and in which either the amount of light is varied, and/or the amount of ozone. Again after regular intervals the fading is measured until as much as 10 days. Very stable images show in the presence of ozone only minor fading the same in the presence as in the absence of for example Xenon light.

The process and apparatus for the fading test of an image according to the present invention will hereinafter be described with reference to Fig. 1 that schematically illustrates the construction of an apparatus for the fading test of an image according to the present invention.

Fig. 1 is a schematic representation of an example of an apparatus 1 for the fading test according to the present invention. In this figure, image 2 is entered as a sample, in test chamber 3. Test chamber 3 is surrounded by light source chamber 4, which is provided with an array of light sources 5. Light source chamber 4 is separated from test chamber 3 by transparent separation plate 8. In order to prevent heating up of the test chamber through the heat developed in the light source chamber, the light source chamber is cooled by cool unit 12 provided with blower 13. Ozone is generated by ozone generator 6 and fed to the test chamber 3. The ozone can also be provided through a standard gas cylinder. The temperature of the test chamber can be controlled through circulation unit 7 which can cool or heat the test chamber. The humidity of the test chamber is regulated through humidifier 9 and a dehumidifier 10.

The apparatus can be operated under a constant ozone flow, as well as with an intermittent ozone flow. In exhaust gas treating device 11 the exhaust gas is treated in order to prevent ozone from being discharged in the environment. To test chamber 3 is connected circulation blower 16 for circulating the atmosphere within the test chamber. Ozone, air, via air providing means 17 and humid air via humidifier 9, or dehumidifier 10, respectively, can be premixed, before entering the test chamber as is shown in the figure, or alternatively the streams can be fed individually to the test chamber. Via control unit 14 and measuring instruments 15, the humidity, ozone concentration, temperature and amount of light inside the test chamber are controlled. The sensors, which are used in the test chamber which data are read by the measuring instrument 15 and controlled by control unit 14 are not shown in Figure 1 for the sake of simplicity.

A plurality of samples 2 may be placed in a sample holder as shown. The sample holder is equipped with rotating device. Through the vertical position of the lamps and the vertical arrangement for the test samples, same fading conditions for all test samples is guaranteed.

By working with the method and the apparatus of the present invention, the inventors furthermore discovered that a recording medium of a specific composition provides for excellent results in the fading method of the present invention. These excellent results where also observed when these recording media were exposed to real environmental conditions. The composition of these novel recording media comprises a substrate and a recording layer, in which the recording layer is a multilayer. The multilayer comprises at least two layers. The outermost layer (*viz.* the layer that is in contact with the environment) is referred to herein as the toplayer. In a preferred embodiment, the multilayer comprises three or more layers, which three layers are referred to herein as the underlayer, overlayer and toplayer, wherein the underlayer is in contact with the substrate and the toplayer is in contact with the environment. The overlayer is located between the underlayer and the toplayer. The toplayer, over layer and under layer have a specific composition. The preferred thickness of the toplayer is between 0.5 and 5 µm. The overlayer preferably has a thickness of between 1 and 10 µm, more preferably between 2 and 8 µm and the underlayer, if present, preferably has a thickness of between 2 and 20 µm, more preferably between 3 and 15 µm. Preferably the recording layer is a swellable recording layer comprising in general gelatin or a modified gelatin. It is also possible that the recording layer is a microporous layer.

The gelatin can be any gelatin whether lime-processed or acid processed, hydrolysed or modified, made from animal collagen. Preferably gelatin made from pig skin, pig bone, cow skin or cow bone is used.

The term "modified gelatin" as used herein, refers to gelatin compounds in which at least part of the NH₂ groups is chemically modified. A variety of modified gelatins can be used. For example gelatins modified with a quaternary ammonium groups. An example of such a gelatin is the "Croquat™" gelatin produced by Croda Colloids Ltd. Yet other modified gelatins known in the common gelatin technology, such as phtalated gelatins and acetylated gelatins are also suitable to be used. Good results are obtained, when at least 30% of the NH₂ groups of the gelatin is modified by a condensation reaction with a compound having at least one carboxylic group as described among others in DE-A-19721238. The compound having at least one carboxylic group can have an other functional group like a second carboxylic group and a long aliphatic tail, which in principle is not modified. Long tail in this context means from at least 5 to as much as 20 C atoms. This aliphatic chain can be modified further to adjust the properties like water solubility and ink receptivity. Particularly preferred gelatins of this type are succinic acid modified gelatins in which the succinic acid moiety contains an aliphatic chain from 5 to 20 carbon-atoms, where the chain can be further modified to a certain extend to adjust the water soluble properties or ink receptive properties. Most preferred is dodecenylsuccinic acid modified gelatin, in which at least 30% of the NH₂ groups of the gelatin have been modified with said dodecenylsuccinic acid. Example of such a particularly suitable modified gelatins are available under the trade name Imagel™.

The top layer preferably comprises this modified gelatin Imagel™. with at least one fluorosurfactant in order to obtain a good surface appearance. By using the preferred modified gelatin in the top layer a high gloss is obtained

The top layer comprises the gelatin or modified gelatin, in an amount ranging from 0.5 to 5 g/m².

The over layer which can be a single layer or multilayer comprises besides said gelatin or modified gelatin preferably one or more other water soluble polymers which can be selected from the group of: polyvinyl alcohol (PVA)-based polymers, such as fully hydrolysed or partially hydrolysed PVA, carboxylated PVA, acetoacetylated PVA, quaternary ammonium modified PVA, copolymers and terpolymers of PVA with other polymers, watersoluble cellulose derivatives such as alkyl cellulose (e.g. methyl cellulose), hydroxyalkyl cellulose (e.g. hydroxyethyl cellulose or hydroxypropyl cellulose), carboxyalkyl cellulose (e.g. carboxymethyl cellulose), dextrin, casein, gum arabic, dextran, polyacrylic acid and its copolymers or terpolymers, polymethylacrylic acid and its copolymers or terpolymers, and any other polymer, which contain monomers of carboxylic acids such as acrylic acid, methacrylic acid, maleic acid and crotonic acid, polyvinylpyrolidone (PVP), polyethyleneoxide (PEO), polyacrylamide, polymers of 2-pyrrolidone and its derivatives such as N-(2-hydroxyethyl)-2-pyrrolidone and N-cyclohexyl-2-pyrrolidone, urea and its derivatives such as imidazolidinyl urea, diazolidinyl urea, 2-hydroxyethylethylene urea, and ethylene urea.

Good results are obtained with PVA-based polymers these appear very effective for improving light-fastness properties. In general a large variety of PVA-based polymers can be used, but the preferred PVA-based polymers are those which have been modified to give a good miscibility with aqueous solutions of gelatin. These modifications are such, that in the PVA-based polymer back bone groups are introduced which provide a hydrogen bonding site, an ionic bonding site, carboxylic groups, sulphonyl groups, amide groups and the like, thus providing a modified PVA-based polymer.

A modified PVA-based polymer giving very good results is a poly(vinyl alcohol)-co-poly(n-vinyl formamide) copolymer (PVA-NVF). Very suitable PVA-NVF copolymers for use with the present invention are the copolymers described in WO-A-03/054029, the PVA polymers described in this patent application are herewith included. The amount of other water soluble polymers which are used in the over layer is between 0.5 and 10 g/m². The amount of gelatin or modified gelatin, or a combination of gelatin and modified gelatin in the over layer is between 0.5 and 10 g/m². Those skilled in the art will appreciate, that the top layer and the over layer can comprise other substances in order to realize certain properties other than fading, so it might be desirable to add in the top layer or in the over layer an anti-blocking agent to prevent image transfer when several printed inkjet mediums are piled up. Very suitable anti-blocking agents (also known as matting agents) have a particle size from 1 to 20 µm, preferably between 2 and 10 µm. The amount of matting agent is preferably from 0.01 to 1 g/m², more preferably from 0.02 to 0.5 g/m². The matting agent can be defined as particles of inorganic or organic materials capable of being dispersed in a hydrophilic organic colloid.

The overlayer and/or the toplayer may optionally include thickener agents, biocides, crosslinking agents, brightening agents and further various conventional additives such as colorants, colored pigments, pigment dispersants, mold lubricants, permeating agents, fixing agents for ink dyes, UV absorbers, light stabilising agents, anti-oxidants, dispersing agents, non-fluorosurfactants, anti-foaming agents, leveling agents, fluidity improving agents, antiseptic agents, brightening agents, viscosity stabilizing and/or enhancing agents, pH adjusting agents, anti-mildew agents, anti-fungal agents, agents for moisture-proofing, agents for increasing the stiffness of wet paper, agents for increasing the stiffness of dry paper and anti-static agents. The above-mentioned various additives can be added ordinarily in a range of 0 to 10 weight% based on the solid content of the water soluble polymers and/or gelatin in the top layer or the over layer.

The bottomlayer or underlayer, if present can be a single layer or a multilayer of sublayers, comprising a gelatin and/or a modified gelatin and/or a water soluble polymer. The total amount of said substances is preferably from 0.4 to 30 g/m², more preferably from 0.8 to 25 g/m².

The underlayer typically comprises gelatin and at least one water soluble polymer. Water soluble polymers suitable to be mixed with the (modified) gelatin include PVA-based polymers, such as fully hydrolysed or partially hydrolysed polyvinyl alcohol (PVA), carboxylated PVA, acetoacetylated PVA, quaternary ammonium modified PVA, copolymers and terpolymers of PVA with other polymers, watersoluble cellulose derivatives such as alkyl cellulose (e.g. methyl cellulose), hydroxyalkyl cellulose (e.g. hydroxyethyl cellulose or hydroxypropyl cellulose), carboxyalkyl cellulose (e.g. carboxymethylalkyl cellulose), dextrin, casein, gum arabic, dextran, polyacrylic acid and its copolymers or terpolymers, polymethylacrylic acid and its copolymers or terpolymers, and any other polymer, which contain monomers of carboxylic acids such as acrylic acid, methacrylic acid, maleic acid and crotonic acid, polyvinylpyrolidone (PVP), polyethylene oxide, polyacrylamide, polymers of 2-pyrrolidone and its derivatives such as N-(2-hydroxyethyl)-2-pyrrolidone and N-cyclohexyl-2-pyrrolidone, urea and its derivatives such as imidazolidinyl urea, diazolidinyl urea, 2-hydroxyethylethylene urea, and ethylene urea.

The quantity of gelatin used in the underlayer is preferably from 0.2 to 15.0 g/m², more preferably from 0.4 to 10.0 g/m². The quantity of water soluble polymer used in the underlayer is preferably from 0.2 to 15.0 g/m², more preferably from 0.4 to 10.0 g/m².

The underlayer may further comprise the following ingredients:
- crosslinking agents such as aldehyde compounds, such as formaldehyde and glutaraldehyde, ketone compounds such as diacetyl and chloropentanedion, bis (2-chloroethylurea), triazine compounds such as 2-hydroxy-4, 6-dichloro-1,3,5-triazine, reactive halogen-containing compounds, carbamoyl pyridinium compounds, divinylsulfones, and the like.
- One or more plasticizers, such as (poly)alkylene glycol, glycerol ethers and polymer lattices with low Tg-value such as polyethylacrylate, polymethylacrylate and the like.
- One or more mordants such as quaternary ammonium block copolymers, diaminoalkanes, ammonium quaternary salts and quaternary acrylic copolymer latexes, fluoro compounds, such as tetra ammonium fluoride hydrate, 2,2,2-trifluoroethylamine hydrochloride, 1-(alpha, alpha, alpha - trifluoro-m-tolyl) piperazine hydrochloride, 4-bromo- alpha, alpha, alpha - trifluoro-o-toluidine hydrochloride, difluorophenylhydrazine hydrochloride, 4-fluorobenzylamine hydrochloride, 4-fluoro- alpha, alpha - dimethylphenethylamine hydrochloride, 2-fluoroethylaminehydrochloride, 2-fluoro-1-methyl pyridinium-toluene sulfonate, 4-fluorophenethylamine hydrochloride, fluorophenylhydrazine hydrochloride, 1-(2-fluorophenyl) piperazine monohydrochloride, 1-fluoro pyridinium trifluoromethane sulfonate.
- One ore more conventional additives, such as pigments, biocides, pH controllers, preservatives, viscosity modifiers, dispersing agents, UV absorbing agents, brightening agents, anti-oxidants, light stabilising agents, antistatic agents and/or anionic, cationic, non-ionic, and/or amphoteric surfactants in accordance with the objects to be achieved.

The above-mentioned additives may be added in a range of 0 to 20% by weight, based on the solid content of the water soluble polymers and/or gelatin in the underlayer.

It was found that in case the underlayer is a multilayer it is beneficial to apply different concentrations of gelatin and water soluble polymer in the sublayers of the underlayer. A lower concentration of gelatin and water soluble polymer in the sublayer closest to the support enables a lower viscosity of the mixture which improves the applicability and allows higher coating speeds.

In a specific embodiment an adhesion promoting layer is applied between the support and the underlayer to enhance the adhesion of the coated layers onto the support. This adhesion promoting layer may be coated in a separate step or simultaneously with the receiving layers. The adhesion promoting layer is a thin layer, and preferably has a dry thickness of less than 3 µm, more preferably less than 1 µm. The adhesion promoting layer comprises a gelatin or another water soluble polymer that promotes the adhesion of the underlayer.

An important characteristic of the inkjet recording medium is the gloss. It has been found that the gloss of the medium can be improved by selecting the appropriate surface roughness of the used support. It was found, that providing a support having a surface roughness characterised by the value Ra being less than 1.0 µm, preferably below 0.8 µm a very glossy medium can be obtained. A low value of the Ra indicates a smooth surface. The Ra is measured according to DIN 4776; software package version 1.62 with the following settings:

### (1) Point density 500 P/mm (2) Area 5.6 x 4.0 mm² (3) Cut-off wavelength 0.80 mm (4) Speed 0.5 mm/sec., using a UBM equipment.

The base paper to be used as the support for the present invention is selected from materials conventionally used in high quality printing paper. Generally it is based on natural wood pulp and if desired, a filler such as talc, calcium carbonate, TiO₂, BaSO₄, and the like can be added. Generally the paper also contains internal sizing agents, such as alkyl ketene dimer, higher fatty acids, paraffin wax, alkenylsuccinic acid, such as epichlorhydrin fatty acid amid and the like. Further the paper may contain wet an dry strength agents such as a polyamine, a poly-amide, polyacrylamide, polyepichlorohydrin or starch and the like. Further additives in the paper can be fixing agents, such as aluminium sulphate, starch, cationic polymers and the like. The Ra value for a normal grade base paper is well above 1.0 µm typically above 1.3 µm. In order to obtain a base paper with a Ra value below 1.0 µm such a normal grade base paper can be coated with a pigment. Any pigment can be used. Examples of pigments are calcium-carbonate, TiO₂, BaSO₄, clay, such as kaolin, styrene-acrylic copolymer, Mg-Al-silicate, and the like or combinations thereof. The amount being between 0.5 and 35.0 g/m² more preferably between 0.5 and 20.0 g/m². This pigmented coating can be applied as a pigment slurry in water together with suitable binders like styrenebutadiene latex, methyl methacrylate-butadiene latex, polyvinyl alcohol, modified starch, polyacrylate latex or combinations thereof, by any technique known in the art, like dip coating, roll coating, blade coating or bar coating. The pigment coated base paper may optionally be calendered. The surface roughness can be influenced by the kind of pigment used and by a combination of pigment and calendering. The base pigment coated paper substrate has preferably a surface roughness between 0.4 and 0.8 µm. If the surface roughness is further reduced by super calendaring to values below 0.4 µm the thickness and stiffness values will generally become below an acceptable level.

The ink receiving multilayer of the present invention can be directly applied to the pigment coated base paper. In another embodiment, the pigment coated base paper having a pigmented top side and a back-side is provided on both sides with a polymer resin through high temperature co-extrusion giving a laminated pigment coated base paper. Typically temperatures in this (co-) extrusion are above 280 °C but below 350 °C. The preferred polymers used are poly olefins, particularly polyethylene. In a preferred embodiment the polymer resin of the top side comprises compounds such as an opacifying white pigment e.g. TiO₂ (anatase or rutile), ZnO or ZnS, dyes, coloured pigments, including blueing agents, e.g. ultramarine or cobalt blue, adhesion promoters, optical brighteners, antioxidant and the like to improve the whiteness of the laminated pigment coated base paper. By using other than white pigments a variety of colors of the laminated pigment coated base paper can be obtained. The total weight of the laminated pigment coated base paper is preferably between 80 and 350 g/m². The laminated pigment coated base paper shows a very good smoothness, which after applying the ink receiving layer of the present invention results in a recording medium with excellent gloss.

Other supports used in this invention may suitably be selected from a synthetic paper or a plastic film in which the top and back coatings are balanced in order to minimise the curl behaviour.

Examples of the material of the plastic film are polyolefins such as polyethylene and polypropylene, vinyl copolymers such as polyvinyl acetate, polyvinyl chloride and polystyrene, polyamide such as 6,6-nylon and 6-nylon, polyesters such as polyethylene terephthalate, polyethylene-2 and 6-naphthalate and polycarbonate, and cellulose acetates such as cellulose triacetate and cellulose diacetate. The support may have a gelatin subbing layer to improve coatability of the support. The support may be subjected to a corona treatment in order to improve the adhesion between the support and the ink receiving layer. Also other techniques, like plasma treatment can be used to improve the adhesion.

A process for producing a recording medium of the present invention typically comprises the steps of:
a. optionally preparing at least one aqueous mixture for the underlayer;
b. preparing at least one aqueous mixture of at least a water soluble polymer for the toplayer;
c. preparing an aqueous mixture for the overlayer;
d. adding one or more additives, to at least one of the mixtures for the toplayer over layer and/or optionally the underlayer; and
e. coating said mixtures consecutively or simultaneously on said support using curtain coating, extrusion coating, air-knife coating, slide coating, a roll coating method, reverse roll coating, dip coating processes or a rod bar coating, followed by drying the coated support.

Without wishing to be bound by theory, the inventors surmise, that the recording media of the present invention show the very good fading behaviour through the combined action of the gelatin/modified gelatin layer farthest removed from the substrate, that is the toplayer, and the layer just below this layer (the overlayer) having a combination of gelatin and other water soluble polymers. Through this combination, the oxygen/ozone penetration speed will be reduced, while the light stabilization is improved. The recording medium of the present invention can be used in various recording applications giving images with improved fading behaviour. It is surprising that this improvement can be reached, with relative low thickness of the top layer.

The novel media according to the present invention are designes in such a way, such that the color fading of the used colors after 5 days, measured in accordance with the method of the present invention, wherein the temperature, the amount of light and the amount of ozone is kept constant and the humidity is varied, is less than 30% irrespective of the humidity used. Furthermore, the novel media can be designed to give a dye fading of less than 30% after placing the media with an image printed thereon in a measuring chamber, in which the temperature, the humidity and the amount of ozone is kept constant and in which the amount of light is varied.

The present invention will be illustrated in more detail by the following non-limiting examples. Unless stated otherwise, all ratios given are based on weight.

### Examples

### A. Preparation of under layer (bottom layer) solution 'A' of the recording medium:

A 17 wt.% aqueous solution of a lime bone gelatin with an IEP of 5.0 and average MW of 250 kD (determined by the method described in the Journal of Colloid and Interface Science 243, 476-482, 2001) was adjusted to pH 8.5 with NaOH. An aqueous solution of 30 wt % polyvinyl pyrollidone (PVP) having a molecular weight of 30 000 Daltons (ICN Biochemicals), was also prepared at pH 8.5. A homogeneous mixture (*viz.* no phase separation occurred), of gelatin and PVP having a weight ratio of 6:1 was made by adding 96 weight parts of said PVP solution and 161 weight parts of water into 1000 weight parts of said gelatin solution at a temperature of 40°C; the pH is kept at 8.5. This mixture was agitated for about 30 minutes.

### B. Preparation of the over laver solution 'B' of the recording medium

An aqueous solution containing 27 weight parts of modified gelatin (dodecenyl-succinic modified acid treated gelatin from Stoess GmbH, Germany; modification grade 40%) having an IEP of 5.4, 54 weight parts of PVA-NVF copolymer (CGPS-910, melting range 210-230 °C, CIBA Specialty Chemicals) and 919 weight parts of water was prepared at 40 °C. Additional binder was added for bringing the viscosity to a suitable level for coating. The pH of the solution was adjusted to 9.5 by adding NaOH.

### C. Preparation of the toplayer solution 'C' of the recording medium.

A solution containing 32 weight parts of modified gelatin (dodecenylsuccinic modified acid treated gelatin from Stoess GmbH, Germany with a modification degree of 40% and an IEP of 5.4), 1 weight part of Zonyl® surfactant (a fluoro-carbon type of surfactant) and 967 weight parts of water was prepared at 40 °C. The pH of the solution was adjusted to 8.5 by adding NaOH.

The solutions for underlayer A, overlayer B and toplayer C described above were fed into a slide coating machine, commonly known in the photographic industry, and coated on a photographic grade paper having polyethylene laminated at both sides. After coating, the solution was chilled at a temperature of *ca*. 15 °C to set the gelatin and then dried with dry air at a maximum temperature of 40 °C.

These examples describe one way of applying the invention. An overview of the layer structures of these examples is given below.

### Layer structure

Various recording media were produced by applying on a substrate three layers: an underlayer, an overlayer and a top layer as shown in the scheme below. In the examples each layer is applied in the indicated amount, by the applied flow rate of the coated solution.

| |
|---|
| Toplayer C:1 g/m² |
| Overlayer B: 8 g/m² |
| Underlayer A: 8 g/m² |
| Photographic grade paper with polyethylene laminated on both sides (Laminated Substrate) |

### Evaluation

The ink jet media prepared by the above mentioned formulation and coating process, were printed with a standard image comprising black, cyan, magenta and yellow patches with different densities including OD = 0.6 and 1.0. The image was printed at a room conditions (23°C and 48% Relative Humidity RH) and the printed materials were kept at this condition for at least 1 hour to dry.

A HP5652 printer was used with cartridges 57 and 58.

As a reference recording medium, HP premium plus photo paper (280 g/m²) was used.

The printed images were evaluated according to the present invention.

In a first evaluation 5 ppm ozone, a temperature of 21°C and a 30 klx Xe light exposure were used.

The humidity used during exposure was 20%RH, 47%RH and 60%RH. The fading of the magenta color patch with a density of 0.6 was measured as representative of the fading which occurred.

The results are given in Table 1

| Table 1: Residual color (%) depending on the aging conditions | | | | | | |
|---|---|---|---|---|---|---|
| | Inventive sample | | | Reference | | |
| Humidity | 20 | 47 | 60 | 20 | 47 | 60 |
| Days | | | | | | |
| 1 | 90 | 85 | 90 | 95 | 85 | 80 |
| 2 | 85 | 80 | 85 | 95 | 75 | 65 |
| 5 | 85 | 80 | 85 | 90 | 55 | 40 |
| 10 | 80 | 75 | 80 | 65 | 40 | 20 |

From the results shown in Table 1, it is evident, that our inventive material shows very good fading characteristics under the inventive measuring method as compared to the reference material. There is only a minor fading observed under conditions of temperature, ozone, light at various humidity conditions.

In another test, the fading of the inventive material and reference material were tested at 21 °C and 60% RH, with and without the presence of 5 ppm ozone and with and without 30klx Xe light exposure. Again the fading of the magenta color patch with a density of 0.6 was measured as representative of the fading which occurred. As shown in Table 2

| Table 2: Residual color (%) depending on the aging conditions | | | | | | |
|---|---|---|---|---|---|---|
| | Inventive sample | | | Reference | | |
| Ozone/XE | No/yes | Yes/yes | Yes/no | No/yes | Yes/yes | Yes/no |
| Days | | | | | | |
| 1 | 100 | 80 | 80 | 100 | 60 | 75 |
| 2 | 100 | 80 | 80 | 100 | 45 | 75 |
| 5 | 95 | 80 | 80 | 100 | 40 | 50 |

It is evident from the results in Table 2, that the inventive material is much stronger in resisting the fading, than the reference material. It is surprising to see, that for the reference material the amount of fading occurring in conditions with Xe exposure alone and under alone ozone without exposure to Xe light cannot simply be added, but that apparently a synergetic effect occurs when Xe exposure and ozone presence is used both, because especially at measuring days 1 and 2 the amount of fading in the presence of ozone is not simply the addition of the fading behaviour under Xe exposure alone and the fading behaviour in the presence of ozone alone. Test methods described in the prior art are not able to show this kind of effects.

## Claims

1. Method for measuring the fading of a recorded image comprising the steps of placing the image in a measuring chamber, which contains a mixture of ozone in air, in which chamber the humidity, the amount of light, the temperature and the amount of ozone can be varied independently, wherein the remaining colors of said image are measured after a certain period of time.

2. Method according to claim 1, wherein, in said chamber one or more of the following can be varied independently in the indicated respective ranges:
- the humidity betweenlo and 80%RH;
- the amount of light from 6 to 150 klx;
- the temperature from 10 to 60 °C; and
- the amount of ozone between10 and 80%RH, from 0.1 to 10 ppm.

3. Method according to any of the previous claims, wherein in said chamber the humidity and the amount of light are varied independently and the temperature and the amount of ozone are kept constant.

4. Method according to the previous claims, wherein the mixture essentially consists of ozone, water vapour and air.

5. Method according to any of the previous claims, wherein the temperature, the amount of light and the amount of ozone is kept constant and the humidity is varied.

6. Method according to any of the claims 1-5, wherein the temperature, the humidity and the amount of ozone is kept constant and the amount of light is varied.

7. Apparatus for carrying out a process according to any of the previous claims, comprising a test chamber, in which a test sample can be place and which is provided with means for varying the humidity, the amount of light, the temperature and the amount of ozone independently from each other.

8. Apparatus for carrying out a process according to claim 7, comprising a test chamber, in which a test sample can be place and which is provided with means for varying the humidity and the amount of light and further is provided with means to keep the temperature and the amount of ozone constant.

9. Recording medium comprising a substrate and a recording layer, in which the recording layer is a multilayer of at least two layers, comprising at least a toplayer, which recording medium is composed in such a way, that the color fading of the used colors after 5 days, measured according to a method according to any of the claims 1 to 6 is less than 30%, wherein the toplayer has a thickness of between 0.5 and 5 µm.

10. Recording medium according to claim 9, wherein the recording layer is a swellable recording layer.

11. Recording medium according to claim 10, in which the toplayer comprises a gelatin or a modified gelatin.

12. Recording medium according to any of the claims 9 - 11, wherein said multilayer comprises at least a toplayer, an underlayer and an overlayer.

13. A recording medium according to any of the claims 9-12, wherein the overlayer or over layers comprise at least one of PVA or modified PVA compounds having a thickness or combined thickness between 1 and 10 µm.

14. A recording medium according to claim 12 or 13, wherein the underlayer is a multilayer of sublayers, comprising a gelatin and/or a modified gelatin and/or a water soluble polymer, having a thickness between 2 and 20 µm.

15. Medium according to any one of the claims 9-14, wherein the support is selected from a paper, a base paper, a pigment coated base paper, a laminated pigment coated base paper, a laminated paper, a synthetic paper or a film support.

16. Medium according to any one of the claims 9-15, wherein the support has a surface roughness Ra smaller than 1.0 µm, preferably smaller than 0.8 µm.

17. A method of forming a permanent, precise inkjet image comprising the steps of:
a. providing a recording medium as defined in any of the claims 9-16; and
b. bringing ink into contact with the medium in the pattern of a desired image.
